# EUROPÄISCHE PATENTANMELDUNG

(11) **EP 1 533 491 A1**
(43) Veröffentlichungstag der Anmeldung: **25.05.2005**
(21) Anmeldenummer: 04105513.8
(22) Anmeldetag: 04.11.2004
(51) Int. Cl.: F02B 23/10

(54) **Brennstoffeinspritzsystem**

(30) Priorität: 24.11.2003 DE 10354827
(71) Anmelder: ROBERT BOSCH GMBH, 70442 Stuttgart (DE)
(72) Erfinder: Würfel, Gernot, 71665, Vaihingen / Enz (DE)

(57) **Zusammenfassung**

Ein Brennstoffeinspritzsystem (1) für Brennkraftmaschinen umfaßt ein Brennstoffeinspritzventil (7), das Brennstoff in einen Brennraum (6) einspritzt, der von einer Zylinderwand (2) begrenzt ist, in der ein Kolben (3) geführt ist, und eine in den Brennraum (6) ragende Zündkerze (8). Das Brennstoffeinspritzventil (7) ist so ausgestaltet, daß in dem Brennraum (6) ein teilkegelförmiger Einspritzstrahl (13) erzeugt wird. Eine Kolbenmulde (12) und eine Kolbenoberfläche (15) des Kolbens (3) sind so geformt, daß im Kompressionshub der Brennkraftmaschine in dem Brennraum (6) eine Quetschströmung (16) zwischen Kolben (3) und Zylinderkopf (5) in Richtung auf das Brennstoffeinspritzventil (7) entsteht.

## Beschreibung

### Stand der Technik

Die Erfindung geht aus von einem Brennstoffeinspritzsystem nach der Gattung des Hauptanspruchs.

Bei gemischverdichtenden, fremdgezündeten Brennkraftmaschinen mit innerer Gemischbildung ist für den Schichtladebetrieb im Zündkerzenbereich eine "Gemischwolke" erforderlich, die ein bestimmtes Brennstoff-Luftverhältnis im zündfähigen Bereich aufweist. Zu diesem Zweck werden Brennstoffeinspritzventile mit Düsen eingesetzt, die nach innen oder nach außen öffnen und einen Kegelstrahl erzeugen.

Beispielsweise ist aus der DE 100 26 321 A1 ein Brennstoffeinspritzsystem für Brennkraftmaschinen bekannt, welches ein Brennstoffeinspritzventil umfaßt, das Brennstoff in einen Brennraum einspritzt, der von einer Zylinderwand begrenzt ist, in der ein Kolben geführt ist, und eine in den Brennraum ragende Zündkerze, wobei das Brennstoffeinspritzventil so ausgestaltet ist, daß in dem Brennraum ein kegelförmiger Einspritzstrahl erzeugt wird. Der kegelförmige Einspritzstrahl weist dabei im Bereich der Zündkerze einen Winkelausschnitt auf.

Aus der DE 196 42 653 C1 ist ein Verfahren zur Bildung eines zündfähigen Brennstoff-Luftgemisches bekannt. In den Zylindern von direkt einspritzenden Brennkraftmaschinen ist ein zündfähiges Brennstoff-Luftgemisch bildbar, indem in jeden von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladebetrieb, eine verbrauchs- und emissionsoptimierte Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Auch aus der DE 38 08 635 C2 ist eine Brennstoffeinspritzvorrichtung zum direkten Einspritzen von Brennstoff in den Zylinder einer gemischverdichtenden Brennkraftmaschine bekannt. Die Brennstoffeinspritzvorrichtjung umfaßt dabei ein Brennstoffeinspritzventil, das in der Zylinderwand in einigem Abstand vom Zylinderkopf und gegenüber der Auslaßöffnung angeordnet ist und eine Ausgangsöffnung aufweist, wobei die Strahlachse des Einspritzventils auf den Bereich um die im Zylinderkopf angeordnete Zündkerze gerichtet ist. Das Brennstoffeinspritzventil weist dabei eine magnetbetätigte Ventilnadel mit schraubenförmigen Drallnuten zum Erzeugen einer Drallströmung des Einspritzstrahls auf. Die Gesamtquerschnittsfläche der Drallnuten ist um mindestens die Hälfte kleiner als die Querschnittsfläche der Ausgangsöffnung, wobei das Brennstoffeinspritzventil oberhalb der Spülöffnung angeordnet ist und mit seiner Strahlachse auf den in der Zylinderkopfmitte angeordneten Zündpunkt zeigt.

Mit den aus den obengenannten Druckschriften bekannten Einspritzsystemen werden mehrheitlich wandgeführte Brennverfahren realisiert. Dieses Brennverfahren ist sehr stark von der einströmenden Luftbewegung abhängig, die die Aufgabe hat, ein zündfähiges Brennstoff-Luftgemisch über den gesamten Kennfeldbereich des Schichtladebetriebs exakt in den Elektrodenbereich der Zündkerze zu transportieren. Beim wandgeführten Brennverfahren wird der Brennstoff durch Unterstützung durch mehr oder weniger zerklüftete Brennraumgeometrien unter gleichzeitiger Gemischbildung zur Zündkerze getragen.

Der Gemischtransport zur Zündkerze gelingt bei wand- und luftgeführten Brennverfahren im Leerlauf- und unteren Teillastbetrieb nur sehr unvollkommen, im mittleren Teillastbetrieb zum Teil nur mit unvertretbar geringen Serienstreuungen der verwendeten Hochdruckeinspritzventile bzw. der Strömungsführung durch das Saugrohr. Die mangelhafte Reproduzierbarkeit zeigt sich vor allem an überhöhten Emissionen von unverbrannten Kohlenwasserstoffen, verursacht durch einzelne Verbrennungsaussetzer. Diese Eigenschaften führen zu einem weiteren gravierenden Nachteil der beiden erwähnten Brennverfahren: Der Motor kann im Leerlauf- und unteren Teillastbereich nicht ungedrosselt gefahren werden, da aufgrund des großen Abstands zwischen Brennstoffeinspritzventil und Zündkerze kleinere Einspritzmengen nicht mehr in der für eine stabile Entflammung erforderlichen Gemischkonzentration die Zündkerze erreichen. Das bedeutet, daß das Brennstoff-Luftgemisch an den Kerzenelektroden zu mager wird. Durch die Ansaugluftdrosselung verringert sich jedoch der Verbrauchsvorteil gegenüber fremdgezündeten, gemischverdichtenden Brennkraftmaschinen mit Saugrohreinspritzung.

### Vorteile der Erfindung

Das erfindungsgemäße Brennstoffeinspritzsystem mit den kennzeichnenden Merkmalen des Hauptanspruchs hat demgegenüber den Vorteil, daß mit Hilfe einer entsprechend ausgebildeten Kolbenmulde und einer Quetschströmung zwischen dem Kolben und dem Zylinderkopf der Brennkraftmaschine im Kompressionshub ein strahlgeführtes Brennverfahren realisierbar ist, bei welchem das Brennstoffeinspritzventil durch das Wegblasen des eingespritzten Brennstoffstrahls weitgehend vor Verkokung durch Ablagerungen geschützt und gleichzeitig eine optimale Verbrennung realisiert werden kann.

Durch die in den Unteransprüchen aufgeführten Maßnahmen sind vorteilhafte Weiterbildungen des im Hauptanspruch angegebenen Brennstoffeinspritzsystems möglich.

Vorteilhafterweise ist die Kolbenmulde exzentrisch im Kolben ausgebildet, so daß ein großer Flächenanteil an der Kolbenoberfläche zur Erzeugung der Quetschströmung zur Verfügung steht.

Die Quetschströmung ist in Richtung auf das Brennstoffeinspritzventil gerichtet, so daß der eingespritzte, vorteilhafterweise aus mehreren Einzelstrahlen bestehende Brennstoffstrahl vom Brennstoffeinspritzventil weg- und zur Zündkerze hingeführt wird, um dort entflammt zu werden.

Von Vorteil ist weiterhin, daß die Zündkerze in einer Lücke zwischen einzelnen Strahlen angeordnet ist und daher die Thermoschockbelastung reduziert wird.

In einer vorteilhaften Ausführungsform weist der Brennraum eine firstartige Form auf, bei welcher die Einlaßventile durch eine Überhöhung des Kolbens teilweise abgedeckt sind und die Luftzirkulation die Quetschströmung auf das Brennstoffeinspritzventil hin verstärkt.

### Zeichnung

Ausführungsbeispiele der Erfindung sind in der Zeichnung vereinfacht dargestellt und in der nachfolgenden Beschreibung näher erläutert. Es zeigen:
- Fig. 1A: einen schematischen axialen Schnitt durch ein erstes Ausführungsbeispiel eines erfindungsgemäßen Brennstoffeinspritzsystems,
- Fig. 1B: eine Draufsicht auf das in Fig. 1A dargestellte Ausführungsbeispiel des erfindungsgemäßen Brennstoffeinspritzsystems,
- Fig. 2A: einen schematischen axialen Schnitt durch ein zweites Ausführungsbeispiel eines erfindungsgemäßen Brennstoffeinspritzsystems, und
- Fig. 2B: eine Draufsicht auf das in Fig. 2A dargestellte Ausführungsbeispiel des erfindungsgemäßen Brennstoffeinspritzsystems.

### Beschreibung der Ausführungsbeispiele

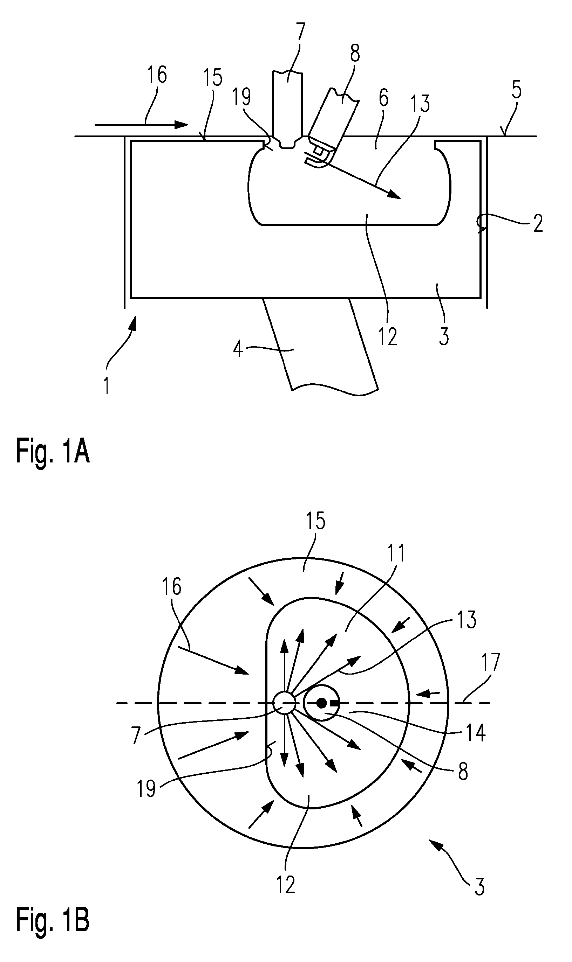

Fig. 1A zeigt in einer ausschnittsweisen Schnittdarstellung ein Ausführungsbeispiel eines erfindungsgemäßen Brennstoffeinspritzsystems. Das Brennstoffeinspritzsystem ist dabei insbesondere zum direkten Einspritzen von Brennstoff in den Brennraum einer gemischverdichtenden, fremdgezündeten Brennkraftmaschine geeignet.

Das Brennstoffeinspritzsystem 1 umfaßt einen Zylinderblock mit einer Zylinderwand 2, in welcher ein Kolben 3 geführt ist. Der Kolben 3 wird durch eine Pleuelstange 4 an der Zylinderwand 2 auf- und abgeführt. Die Zylinderwand 2 ist endseitig durch einen Zylinderkopf 5 abgeschlossen. Die Zylinderwand 2, der Kolben 3 und der Zylinderkopf 5 schließen einen Brennraum 6 ein.

Im Zylinderkopf 5 ist ein Brennstoffeinspritzventil 7 vorzugsweise zentriert angeordnet. Etwas seitlich versetzt ist eine Zündkerze 8 in eine Bohrung des Zylinderkopfes 5 eingefügt. Weiterhin sind im Ausführungsbeispiel nicht weiter dargestellte Ein- und Auslaßventile vorhanden. Die Anordnung von Brennstoffeinspritzventil 7 und Zündkerze 8 sowie der erfindungsgemäßen Maßnahmen wird in Fig. 1B näher gezeigt.

Beim im Betrieb befindlichen Brennstoffeinspritzsystem 1 wird durch im Brennstoffeinspritzventil 7 vorhandene Abspritzöffnungen ein teilkegelförmiger Brennstoffstrahl 11 in den Brennraum 6 eingespritzt. Durch Vermischung von Brennstoff und Luft im Brennraum 6 wird eine Gemischwolke gebildet. Der kegelförmige Brennstoffstrahl 11 ist dabei so ausgerichtet, daß er in eine Kolbenmulde 12 eindringt, welche entsprechend gestaltet ist. Die Form des Brennstoffstrahls 11 ist dabei kegelsegmentförmig, d.h. eine Projektion auf die Kolbenmulde 12 entspricht ungefähr einem Halbkreis. Der Brennstoffstrahl 11 ist dabei, wie aus Fig. 1B ersichtlich, vorzugsweise aus zwei bis acht einzelnen Strahlen 13 aufgebaut, zwischen welchen eine Lücke 14 für die Zündkerze 8 ausgebildet ist.

Um zu erreichen, daß sich das Brennstoffeinspritzventil 7 nicht durch eine an das Brennstoffeinspritzventil 7 schlagende Flammfront während des Verbrennungsprozesses mit Verbrennungsrückständen in den Abspritzöffnungen zusetzt, wird durch eine entsprechende Ausformung des Kolbens 3 im Bereich der Kolbenmulde 12 und einer Kolbenoberfläche 15 erfindungsgemäß eine Quetschströmung 16 zwischen dem Kolben 3 und dem Zylinderkopf 5 erzeugt, welche den Brennstoffstrahl 11 vom Brennstoffeinspritzventil 7 weg- in Richtung auf die Zündkerze 8 bläst.

Dabei ist die Kolbenmulde 12 exzentrisch so im Kolben 3 ausgebildet, daß der größere Teil der die Quetschströmung 16 hervorrufenden Kolbenoberfläche 15 an der dem Brennstoffstrahl 11 abgewandten Seite des Kolbens 3 ausgebildet ist, während nur eine kleine, durch die Bildung der Kolbenmulde 12 zwangsläufig vorhandene Kolbenoberfläche 15 seitlich und gegenüber dem Brennstoffstrahl 11 ausgebildet ist. Die Anteile der dort wirksamen Quetschströmung 16 sind verhältnismäßig klein. Eine Quetschkante 19 der Kolbenmulde 12 und die Rückseite des Brennstoffstrahls 11 fallen ungefähr zusammen.

Der Brennstoffstrahl 11 wird demnach nach dem Einspritzen in der Kompressionsphase der Brennkraftmaschine vom Brennstoffeinspritzventil 7 weg zur Zündkerze 8 geblasen, dort entflammt und verbrennt in Richtung auf die Kolbenmulde 12, ohne zum Brennstoffeinspritzventil 7 zurückzuschlagen. Die Kolbenoberfläche 15, das Brennstoffeinspritzventil 7 und die Zündkerze 8 sind dabei in einer Reihe und der angegebenen Reihenfolge angeordnet.

Ein weiterer Vorteil der durch die Quetschströmung induzierten Verblasung ist auch, daß der Abstand zwischen der Zündkerze 8 und dem Brennstoffeinspritzventil 7 größer toleriert werden kann, ohne daß die Verbrennung schlechter wird.

Aus Fig. 1B ist ersichtlich, daß somit der Brennstoffstrahl 11 so eingespritzt wird, daß ein strahlgeführtes Brennverfahren ohne Benetzung des Kolbens 3 oder der Zylinderwand 2 realisierbar ist, wobei die Zündkerze 8 unweit des Brennstoffeinspritzventils 7 und der Wurzel des Brennstoffstrahls 11 vorzugsweise auf einer Winkelhalbierenden 17 des Brennstoffstrahls 11 angeordnet ist. Die Pfeile zeigen die Richtung und die ungefähre Stärke der Quetschströmung 16 an.

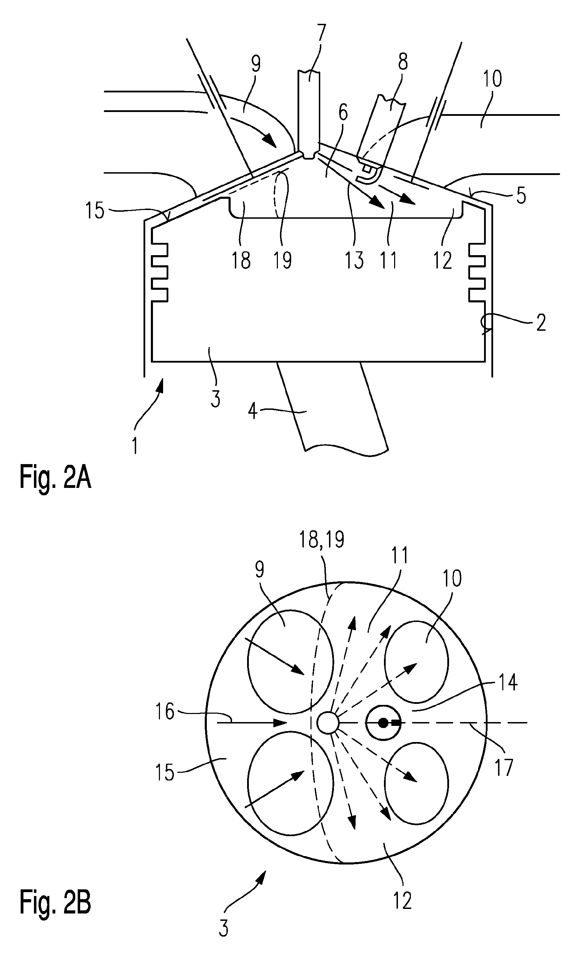

In einem zweiten Ausführungsbeispiel gemäß den Fig. 2A und 2B wird eine ähnliche Anordnung mit einem dachförmigen Brennraum 6 vorgeschlagen. Hierbei ist die Kolbenmulde 12 weniger stark ausgeprägt als im vorstehend beschriebenen Ausführungsbeispiel. Statt dessen weist der Kolben 3 im Bereich der Einlaßventile 9 eine Überhöhung 18 auf, welche ebenfalls für die Erzeugung einer Quetschströmung 16 in Richtung auf das Brennstoffeinspritzventil 7 geeignet ist. Die Kolbenmulde 12 ist ansonsten flach ausgebildet.

Die gestrichelte Linie in Fig. 2A deutet eine starke Überhöhung 18 an. Je nach Anforderungen an die Kompression und die Stärke der Quetschströmung 16 kann die Überhöhung 18 auch geringer sein, wie anhand der durchgezogenen Linie erkennbar.

Auch hier fallen, wie aus Fig. 2B ersichtlich, die Quetschkante 19 der Überhöhung 18 und die Rückseite des Brennstoffstrahls 11 ungefähr zusammen. Die Anordnung von Brennstoffeinspritzventil 7 und Zündkerze 8 ist ähnlich zu der in Fig. 1B dargestellten Anordnung. Die Zündkerze 8 befindet sich dabei näher an den Auslaßventilen 10, während das Brennstoffeinspritzventil 7 in einem kühleren Bereich nahe den Einlaßventilen 9 angeordnet ist.

Diese Anordnung hat den Vorteil, daß die natürliche Strömung der Luft durch die Einlaßventile 9 die Quetschströmung 16 verstärkt.

Die Erfindung ist nicht auf die dargestellten Ausführungsbeispiele beschränkt und für beliebige Mehrloch-Brennstoffeinspritzventile 7, mehrere Zündkerzen 8 und eine variable Anzahl von Ein- und Auslaßventilen 9, 10 anwendbar. Insbesondere sind beliebige Kombinationen der einzelnen Merkmale möglich.

## Patentansprüche

1. Brennstoffeinspritzsystem (1) für Brennkraftmaschinen mit wenigstens einem Brennstoffeinspritzventil (7), das Brennstoff in einen Brennraum (6) einspritzt, der von einer Zylinderwand (2) begrenzt ist, in der ein Kolben (3) geführt ist, und mit einer in den Brennraum (6) ragenden Zündkerze (8), wobei das Brennstoffeinspritzventil (7) so ausgestaltet ist, daß in dem Brennraum (6) ein teilkegelförmiger Einspritzstrahl (11) erzeugt wird,
**dadurch gekennzeichnet,**
**daß** eine Kolbenmulde (12) und eine einem Zylinderkopf (5) gegenüberliegende Kolbenoberfläche (15) des Kolbens (3) so geformt sind, daß im Kompressionshub der Brennkraftmaschine in dem Brennraum (6) eine Quetschströmung (16) zwischen Kolben (3) und Zylinderkopf (5) entsteht.

2. Brennstoffeinspritzsystem nach Anspruch 1,
**dadurch gekennzeichnet,**
**daß** die Quetschströmung (16) in Richtung auf das Brennstoffeinspritzventil (7) gerichtet ist.

3. Brennstoffeinspritzsystem nach Anspruch 1 oder 2,
**dadurch gekennzeichnet,**
**daß** die Kolbenmulde (12) exzentrisch in dem Kolben (12) ausgebildet ist.

4. Brennstoffeinspritzsystem nach Anspruch 3,
**dadurch gekennzeichnet,**
**daß** die Kolbenmulde (12) eine Quetschkante (19) aufweist.

5. Brennstoffeinspritzsystem nach Anspruch 4,
**dadurch gekennzeichnet,**
**daß** das Brennstoffeinspritzventil (7) nahe der Quetschkante (19) angeordnet ist.

6. Brennstoffeinspritzsystem nach Anspruch 4 oder 5,
**dadurch gekennzeichnet,**
**daß** die Zündkerze (8) an der der Quetschkante (19) gegenüberliegenden Seite des Brennstoffeinspritzventils (7) angeordnet ist.

7. Brennstoffeinspritzventil nach einem der Ansprüche 1 bis 6,
**dadurch gekennzeichnet,**
**daß** die Kolbenoberfläche (15) und der Zylinderkopf (5) eine aneinander angepaßte Form aufweisen.

8. Brennstoffeinspritzventil nach Anspruch 7,
**dadurch gekennzeichnet,**
**daß** der Brennraum (6) firstartig geformt ist.

9. Brennstoffeinspritzsystem nach einem der Ansprüche 4 bis 6,
**dadurch gekennzeichnet,**
**daß** die Quetschkante (19) an einer Überhöhung (18) des Kolbens (3) ausgebildet ist.

10. Brennstoffeinspritzsystem nach Anspruch 9,
**dadurch gekennzeichnet,**
**daß** die Überhöhung (18) so ausgebildet ist, daß zumindest ein in dem Zylinderkopf (5) angeordnetes Einlaßventil (9) von der Überhöhung (18) teilweise abgedeckt ist.

11. Brennstoffeinspritzsystem nach einem der Ansprüche 1 bis 10,
**dadurch gekennzeichnet,**
**daß** ein durch das Brennstoffeinspritzventil (7) in den Brennraum (6) eingespritzter Brennstoffstrahl (11) halbkegelförmig ausgebildet ist.

12. Brennstoffeinspritzsystem nach Anspruch 11,
**dadurch gekennzeichnet,**
**daß** der Brennstoffstrahl (11) aus mehreren einzelnen Strahlen (13) besteht.

13. Brennstoffeinspritzsystem nach Anspruch 12,
**dadurch gekennzeichnet,**
**daß** die Anzahl der Strahlen (13) zwei bis acht beträgt.

14. Brennstoffeinspritzsystem nach einem der Ansprüche 11 bis 13,
**dadurch gekennzeichnet,**
**daß** die Zündkerze (8) auf einer Winkelhalbierenden (17) des Brennstoffstrahls (11) angeordnet ist.

15. Brennstoffeinspritzsystem nach Anspruch 14,
**dadurch gekennzeichnet,**
**daß** die Zündkerze (8) in einer Lücke (14) zwischen zwei benachbarten Strahlen (13) angeordnet ist.
